Europäisches Patentamt

European Patent Office

Office européen des brevets

(11) Publication number: **0 257 965**
**A2**

# EUROPEAN PATENT APPLICATION

(21) Application number: **87307293.8**

(22) Date of filing: **18.08.87**

(51) Int. Cl.⁴: **B 44 B 1/00**

(30) Priority: **18.08.86 GB 8620040**

(43) Date of publication of application:
**02.03.88 Bulletin 88/09**

(84) Designated Contracting States:
**AT BE CH DE ES FR GR IT LI LU NL SE**

(71) Applicant: **Samangooie, Fazlollah**
**7 Lord Chancellor Walk Coombe Hill**
**KINGSTON UPON THAMES SURREY KT2 7HG (GB)**

(72) Inventor: **Samangooie, Fazlollah**
**7 Lord Chancellor Walk Coombe Hill**
**KINGSTON UPON THAMES SURREY KT2 7HG (GB)**

(74) Representative: **Alexander, Thomas Bruce et al**
**Boult, Wade & Tennant 27 Furnival Street**
**London EC4A 1PQ (GB)**

(54) **Model making.**

(57) An object to be modelled is analysed by a machine which determines the x, y, z co-ordinates of every point on the surface of the object, the co-ordinate data are processed and the data are fed to a shaping machine to control the machine cutting heads to shape the block of material into a model or mould of the object.

FIG. 1.

EP 0 257 965 A2

## Description

### MODEL MAKING

This invention relates to a model making method.

Up to now, to produce a model of an object with non-geometrical features, for example, a statue, an artistic craftsman is needed, just as in the days before the age of photography, when a portrait or landscape painter was needed to produce a visual record of a person or place.

The present invention provides a model making method comprising the steps of providing a machine to determine the x, y, z co-ordinates of points on the surface of an object, processing the information determined by said machine into instruction data, and providing a machine operable in response to said instruction data to embody in a 3-dimensional medium a model or mould of the object.

The invention also provides shaping apparatus comprising clamping means for mounting a block of material to be shaped, means concentrically mounting two frame structures for independent rotational movement about a main axis and around a block of material mounted in said clamping means, at least two cutting heads for shaping the block of material, means mounting at least one of the cutting heads on each frame structure to enable movement of the cutting heads relative to their respective frame structure in directions parallel to and radially with respect to said main axis and about a rotational axis prependicular to said main axis, and means to control operation of the cutting heads and movement of the frame structures and the cutting heads.

The invention further provides shaping apparatus comprising a frame structure, at least one cutting head for shaping material, means mounting the cutting head on the frame structure to enable movement of the cutting head relative to the frame structure in a direction parallel to a main axis, perpendicular to said main axis and about a rotational axis perpendicular to said main axis, means being provided for attaching the frame structure to a surface to be shaped, eg a wall, with said main axis normal to the surface, and means to control operation and movement of the cutting head.

The invention further provides a data processing system using at least two cameras to produce two TV images of an object to be modelled, and means to calculate the x, y, z co-ordinates for each point on the surface of the object by matching the projection on the two TV images of each said point according to the following steps:

selecting on a first TV image a pixel corresponding to a point on the surface of the object and producing an imaginery chord line from the pixel passing through the central axis of the respective camera lens, producing two imaginery planes on either side of the object and determining the x, y co-ordinates of the points of intersection of the imaginery chord line with said imaginery planes,

relating said points of intersection to the second TV image and representing said points of intersection by two respective pixels on the second TV image, searching in between said two respective pixels on the second TV image to find a pixel with the same grey level as the selected pixel on the first TV image and comparing characteristics of neighbouring pixels to find corresponding pixels on both TV images, enabling calculation of the x, y, z co-ordinates for the point on the surface of the object.

The method according to the invention may have the following further characterising features:

1. A non-contact 3-dimensional distance measuring device, a computer and a NC shaping machine.

2. A non-contact 3-dimensional distance measuring probe may be provided for microscopic measurement, to produce large scale models of microscopic objects.

3. Non-contact 3-dimensional distance measuring systems may be provided for long distance large scale measurement of big objects (such as buildings, mountains, etc) to produce small scale models of large objects.

4. The non-contact 3-dimensional distance measuring system may be used for medium-range distance measurement of human sized objects, to produce models with different scales.

5. The NC shaping machine may be used to produce very small scale models.

6. The NC shaping machine may be used to produce large scale models at once in whole or in different parts.

7. The NC shaping machine may be used to produce medium range models of human size in different scales.

8. The NC shaping machine may be used to produce models made of different materials in different pre and after shaping phases (liquid, rigid, gas, granular, monomers, pre-polymers, polymers, resins, pastes, etc)

9. The NC shaping machine may be used to permanently or spontaneously reproduce the 3-dimensional model of the object using light effects in gas, liquid and transparent solid media.

10. Software and hardware (for computer) may be used to manipulate, dissect and superimpose the shapes of the objects to produce respective models.

11. A non-contact 3-dimensional distance measuring probe, a computer and an NC shaping machine may be used to produce a semi-finished model, and/or a mould for reproducing a complete or semi-finished model.

12. Non-contact or semi-contact 3-dimensional distance measuring probes may be used to carry out the measurement at once or in several stages by a combination of different equipments.

13. A computer may be used to work out numerical functions at once or in several stages by different software or hardwares.

14. A shaping machine may be used to carry out shaping of the model, at once or in several stages by different NC and/or non-NC equipments.

Some specific embodiments of the invention will now be described by way of practical propositions for implementation of the method with reference to the accompanying drawings, in which:-

Figures A, B and C show one form of shaping apparatus according to the invention,

Figures D, E and F show an alternative form of shaping apparatus according to the invention,

Figure G illustrates chord search software according to the invention,

Figure H illustrates a triple camera digitiser apparatus, and

Figure I illustrates the triple camera software system.

There is seen in Figures A, B and C a shaping apparatus which can shape a model based on data transferred from a computer in a cylindrical coordination system. Several tools can carve simultaneously, reducing the total time requirements. Referring to the drawings, the apparatus comprises a chassis 1 with protection grids and doors (not shown).

The chassis 1 houses and supports the moving parts of the apparatus through support shafts 2, support arms 3 and support rollers 4.

The block of material to be modelled is fixed by adjustable grips 5 and is shaped by cutting heads 6 which are held and powered by rotating tool grip 7.

The cutting heads 6 can move : transversely by sliders 9, up and down by vertical guides 10 which are fixed to the upper and lower rings to make rotating frames 11 and 12. These frames can rotate independently around shaft 2 by the use of bearings 13 and can give the cutting heads a circular motion.

Control boxes 8 control the motion and angle F of sliders 9, and the motion on vertical guides 10. Control boxes 14 control the rotation of rotating frames 11 and 12. The coordination of the tips of the cutting heads is thus controlled by the computer whose data configures the shape of the object.

There is seen in Figures D, E and F an alternative shaping apparatus which shapes a model on a surface, eg a wall, ceiling or floor, based on data dictated from a computer. Several tools can carve simultaneously reducing the total time requirements.

Referring to the drawings, the apparatus comprises two multi-slider, extendible guide beams 20 on which supports 21 can be secured and sliding control boxes 22 can travel.

Adjustable bars 23 and columns 24 fix the position of the guide beams. Sliding control boxes 22 support and move the vertical guide bars 29 and guide lintels 30. Several sliding sets 22 could be incorporated simultaneously and guides beams 20 could be extended by similar pieces from both sides. The material is carved by suitable bits 28 which are held and powered through grip 27, sliding arms 26 and control boxes 25 which are guided by bars 29 or lintels 30. Vertical guides 29 could also be used for guiding and holding lintels capable of vertical movement. Control boxes 25 and 22 dictate the coordination of the tip of the shaping bits, under the control of the computer. The whole machine is fastened to the surface, eg wall, floor or ceiling using, eg cables 31 and suitable supports, or alternatively on a gantry or supporting frame-work 32 when the place being carved is not too high.

Different hardware and software could be employed depending on the size of the object and the material scale, and precision of the desired model or mould. The practical propositions could be classified as per variations in the systems implementing various steps of the method.

STEP I : DIMENSION MEANSUREMENT

- Generally any non-contact meansurement system can be utilized in this method. These systems basically include a vision part through which the scene is presented to the system and an extraction part by which the three-dimensional information is obtained. For the vision part, various optical manipulation and light effects could be used depending on the size of the object:

1. Microscopic particles: an electronic or ordinary microscope to present two stereo images of the particles on two TV screens; data extraction can take the method discussed below.

2. Small objects: CCD or video cameras equipped with enlargement lenses could be used, following the procedures of human size objects.

3. Human size objects: Reflectometric and stereometric techniques could be used.

Example 1: Using a triple camera digitizer system described below.

Example 2: Two CCD or video cameras to take stereo images, used as discussed below.

Example 3: CCD or video camera to take the image of the contour pattern of the object. The contour pattern can be produced by moire fringe, light bands, or moving light spots.

Example 4: Using phase measuring moire topography.

4. Buildings: Medium range photogrammetry will be used while the exact location of the key points, eg edges, etc could be determined by echometric systems such as electronic distance measuring equipment. The data can then be combined by the software features.

5. Mountains etc: Ariel photogrammetry can be used to present the same to the system.

STEP II: PREPARATION OF INSTRUCTION DATA

- The CCD or video cameras give the frame stores the data configured by the image of the scene. The data is transferred through proper interfaces. The images are analysed, ie, each point on the image of the object is distinguished by its x, y coordinates and a grey level representing the intensity of light reflected by that point. The z dimension of the points can be calculated in the following ways:

1. By possessing at least two images using geometrical inter-relation of the x, y co-ordinates of a given point on each image and the distance between the cameras and lens characteristics.

2. By taking into account the specification of shadow or light spots or bands.

3. By introduction of a reference grating in case of Example 4 above.

The computer is programmed for calculation of the x,y,z coordinates of the points on the object and the subsequent data processing through a software program. The software is capable of storing and re-forming the co-ordinate data for giving different actions such as representation of the object on a TV screen for inspection and possible retouches, dissecting and super-imposing the shapes of the objects. When the shape is ready for production of the model, the software is also used for providing NC machines with the instruction data on tool path, carving stages and scaling of the model, etc.

STEP III – THE SHAPING APPARATUS:

Conveniently, numerically controlled machines (NC machines) can be used for the model making method. Different sizes and materials of the finished models deserve specific NC machines. Cylindrical coordination can be used for production of busts and statues, and special gantry machines for ornamental and large scale models.

CHORD SEARCH SOFTWARE

This sotfware automates the electronic stereo photogrammetry (ESP) method. ESP method is an existing method for determination of the x, y, z co-ordinates of the points on the surface of an object based on close range photogrammetry. Two stereoscopic TV images, instead of photographs are used by means of appropriate hardware and ESP software. ESP method is basically non-automatic, ie, for locating the two projections of each point on the two TV screens human observation and judgement is used, which is one of the shortcomings of ESP method. Different approaches have been examined for automation of ESP method, which are generally not feasible for practical uses. In one of these approaches, a pixel "P1" on one of TV screens is selected and the grey levels of the eight adjacent pixels are identified. Then a search is done for finding the same combination on the other TV image for finding the corresponding pixel "P2". The pixels "P1" and "P2" are supposed to be the stereo projections of a point "P" on the object. Since all of the pixels on the other screen are considered to be prospective pixel "P2", this approach is very time consuming. The present software comprises the following segments:

A. The software of ESP method for the analysis of information stored in electronic frame store, supplied from CCD or video cameras. This part of the software also determines the x, y, z co-ordinates of the points on the object when the corresponding pair of pixels relating to the two TV images is located by segment B.

B. A chord search, to match the two pixels which relate to the projections of each point on the object automatically. The geometrical procedure is as follows:

A pixel R1 is selected from TV image 1. The points Q and S (Figure G) with given $Z_q$ and $Z_s$ can be specified on an assumed chord line connecting R1 to the centre of the lens of camera 1. Points Q and S are the points of intersection of the assumed chord line with assumed planes on either side of the object. Point R on the object is between Q and S. The chord $Q_2S_2$ can be specified on the TV image 2. Now the search is limited to a piece of chord $Q_2S_2$, for finding pixel R2. The x, y z co-ordinates of the point R on the object can be calculated and stored in a computer memory using ESP software one the projections of the point R on both TV images has been located.

C. The three dimensional data can be further processed for reassembling the object on a TV screen for examination, inspection, retouches, dissecting and super-imposing the shapes of the object and also for giving the tool path instruction for control software of an NC machine.

TRIPLE CAMERA DIGITIZER SYSTEM

The system comprises a vision compartment consisting of three video or CCD cameras with spot laser beam emitters, lighting set with time dimmer switch all installed on a holder frame work, interfaces and triple image analyser hardware and required software. The vision compartment provides the computer with triple scenes from each side of the object, with reference points facilitated by laser beams on the objects.

As seen in Figure H, the apparatus is secured to column shaft 1 by means of sliding grip 2, holding horizontal shaft 3. Triple grip 4 gives arms 5 the possibility of independent positioning around and along shaft 3. Grips 6 via adjustable joints 7 connect guide bars 8 to arms 5. Sliding camera seats 9 provide the cameras with facility of rotation and horizontal movement around and along guide bars 8. Thus, the three cameras could have any desired position relative to each other. At the tip of horizontal shaft 3 the lighting set 10 is installed which lights the object with variable intensity facilitated by a time dimmer. The scene is detected by the three cameras from a dark state to a maximum intensity.

A laser beam generator is incorporated with each camera to emit a beam of safe light from the axis of the lens of the camera to the object.

The data thus collected transferred from the cameras through the appropriate interfaces to storage/recording media of the triple image analyser. The triple image analyser is basically an ESP system with appropriate adjustments for three incoming images.

The software is the chord search software described above. However the chord QS could be located on two screens, Figure I, and the search time will be reduced, as searching for R1 can be started from one side of the chord say Q1, and that of image 2 (R2) from the other side, say $S_2$, and the first

match will be done in a time less than half of that of two camera systems. The computation results can also be double checked for more accuracy. The bright laser points A,B,C on the object could be used to obtain the absolute dimensions knowing the configuration of the cameras. The object can belrotated or the system could be travelled around the object for a complete survey. The system is also capable of cylindrical and polar coordination data processing by adjusting the relative position of the cameras and giving the software the required commands.

## Claims

1. The present invention provides a model making method comprising the steps of providing a machine to determine the x, y, z co-ordinates of points on the surface of an object, processing the information determined by said machine into instruction data, and providing a machine operable in response to said instruction data to embody in a 3-dimensional medium a model or mould of the object.

2. Shaping apparatus comprising clamping means for mounting a block of material to be shaped, means concentrically mounting two frame structures for independent rotational movement about a main axis and around a block of material mounted in said clamping means, at least two cutting heads for shaping the block of material, means mounting at least one of the cutting heads on each frame structure to enable movement of the cutting heads relative to their respective frame structure in directions parallel to and radially with respect to said main axis and about a rotational axis prependicular to said main axis, and means to control operation of the cutting heads and movement of the frame structures and the cutting heads.

3. Apparatus as claimed in Claim 2 and comprising a housing to surround and mount the apparatus.

4. Apparatus as claimed in Claim 2 or Claim 3 wherein said means to control movement of the frame structures and cutting heads comprises a computer using cylindrical co-ordinate data for command instructions.

5. Shaping apparatus comprising a frame structure, at least one cutting head for shaping material, means mounting the cutting head on the frame structure to enable movement of the cutting head relative to the frame structure in a direction parallel to a main axis, perpendicular to said main axis and about a rotational axis perpendicular to said main axis, means being provided for engaging the frame structure with a surface to be shaped, eg a wall, with said main axis normal to the surface, and means to control operation and movement of the cutting head.

6. Apparatus as claimed in claim 5 and including an additional frame section and means to attach the additional frame section to the frame structure to increase the range of travel of the cutting head in a direction perpendicular to said main axis.

7. A data processing system using at least two cameras to produce two TV images of an object to be modelled, and means to calculate the x, y, z co-ordinates for each point on the surface of the object by matching the projection on the two TV images of each said point according to the following steps:
selecting on a first TV image a pixel corresponding to a point on the surface of the object and producing an imaginery chord line from the pixel passing through the central axis of the respective camera lens,
producing two imaginery planes on either side of the object and determining the x, y co-ordinates of the points of intersection of the imaginery chord line with said imaginery planes, relating said points of intersection to the second TV image and representing said points of intersection by two respective pixels on the second TV image,
searching in between said two respective pixels on the second TV image to find a pixel with the same grey level as the selected pixel on the first TV image and comparing characteristics of neighbouring pixels to find corresponding pixels on both TV images, enabling calculation of the x, y, z co-ordinates for the point on the surface of the object.

8. A system as claimed in Claim 7 and including means for storing the x, y, z co-ordinate data for all points on the surface of the object.

9. A system as claimed in Claim 7 or Claim 8 wherein three cameras and the TV images of any two of the cameras are used.

10. A system as claimed in Claim 9 and including means to project a laser beam along the central axis of each camera lens to give three reference points on the surface of the object.

FIG. 2.

FIG. 1.

0257965

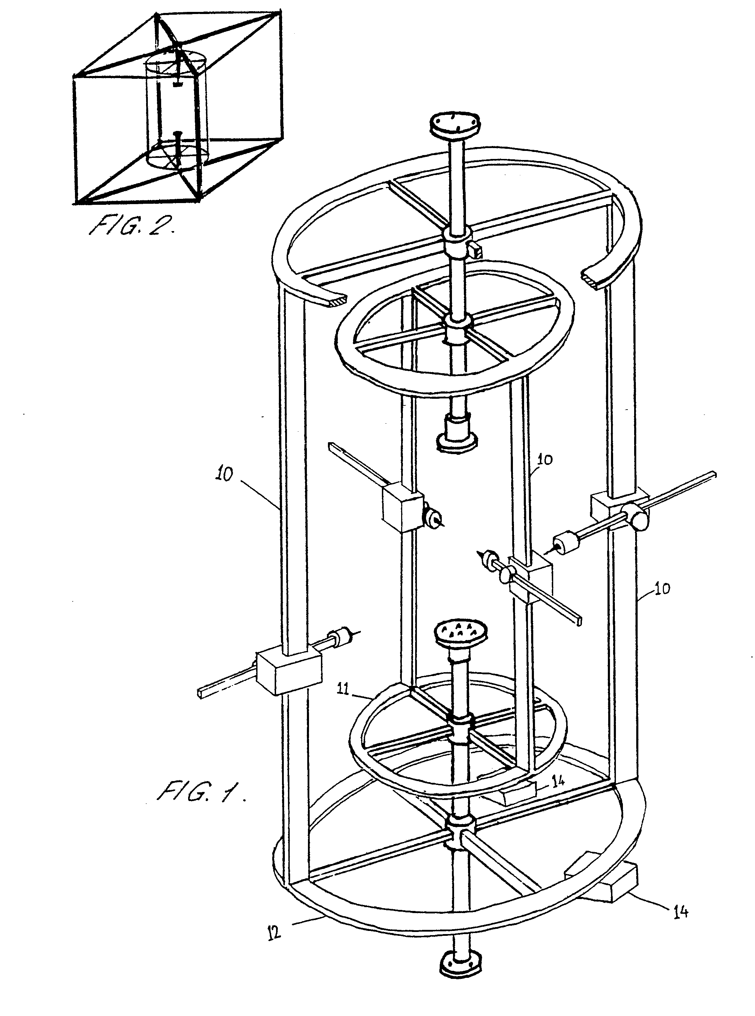

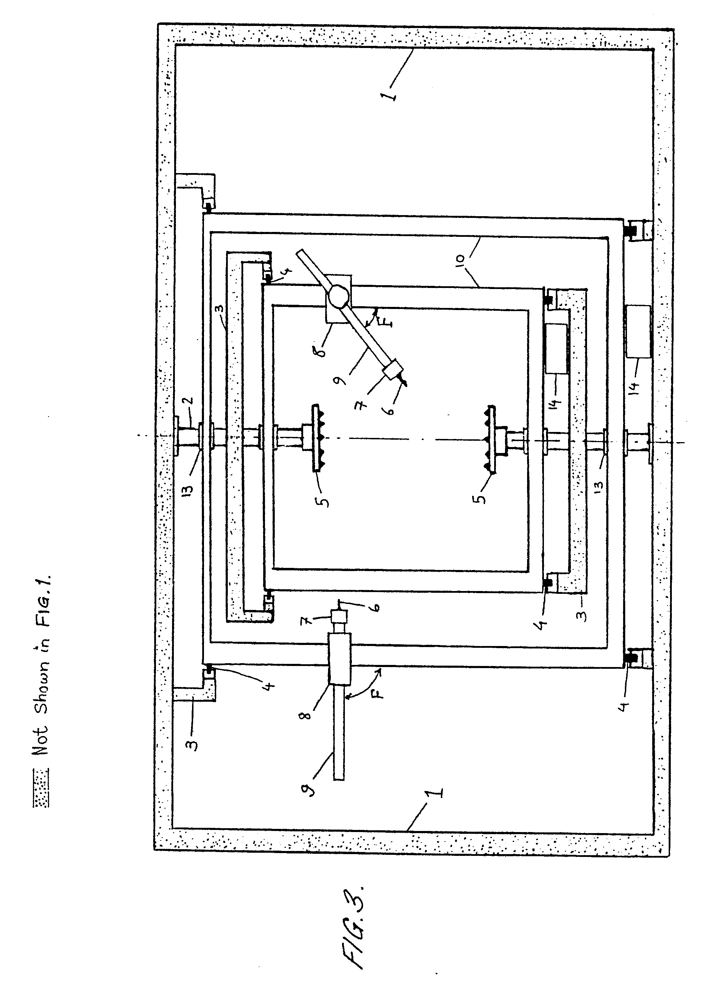

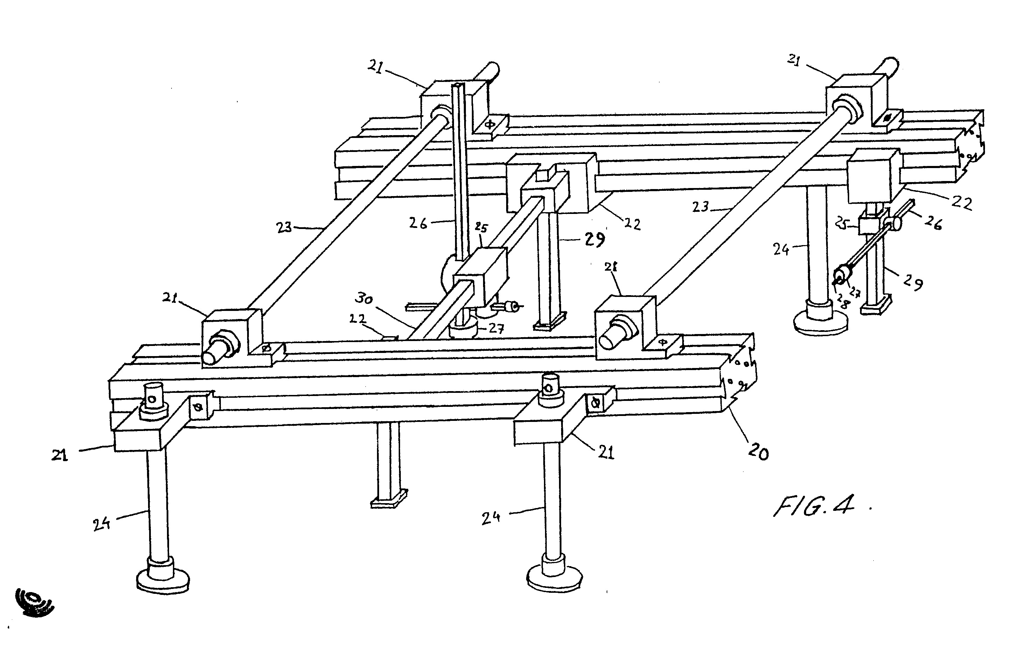

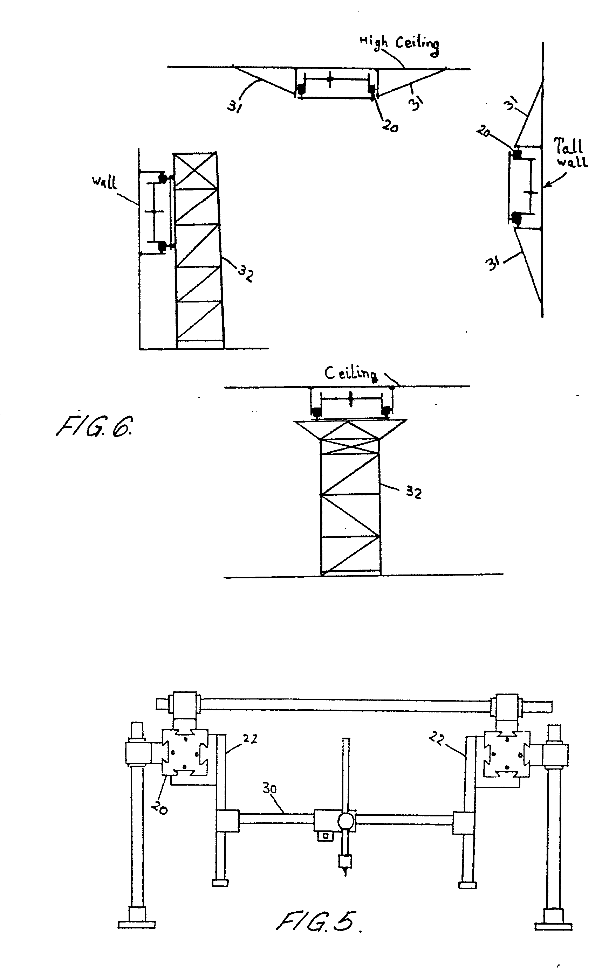

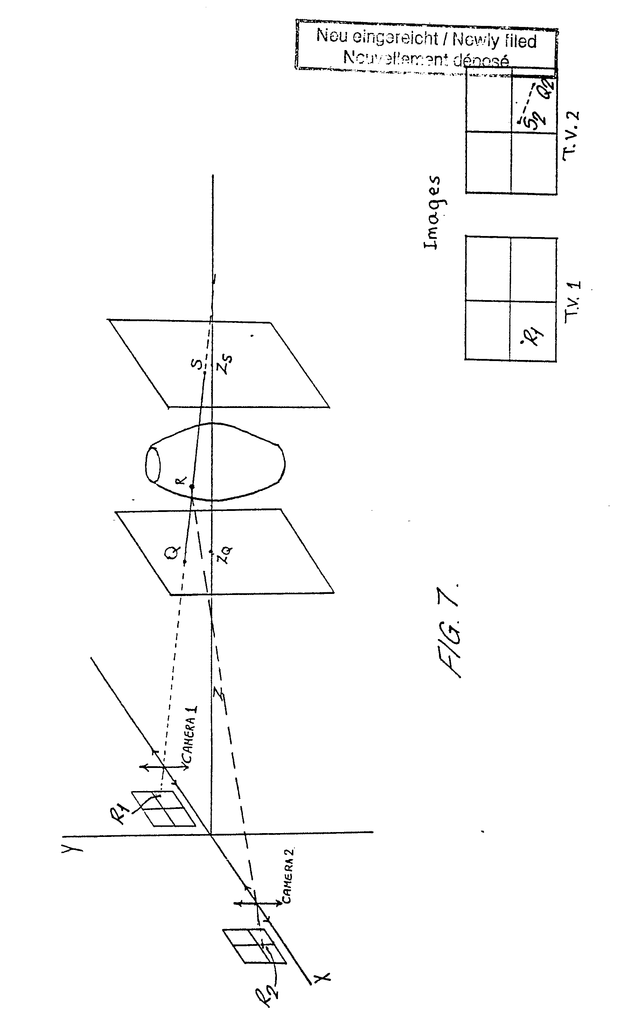

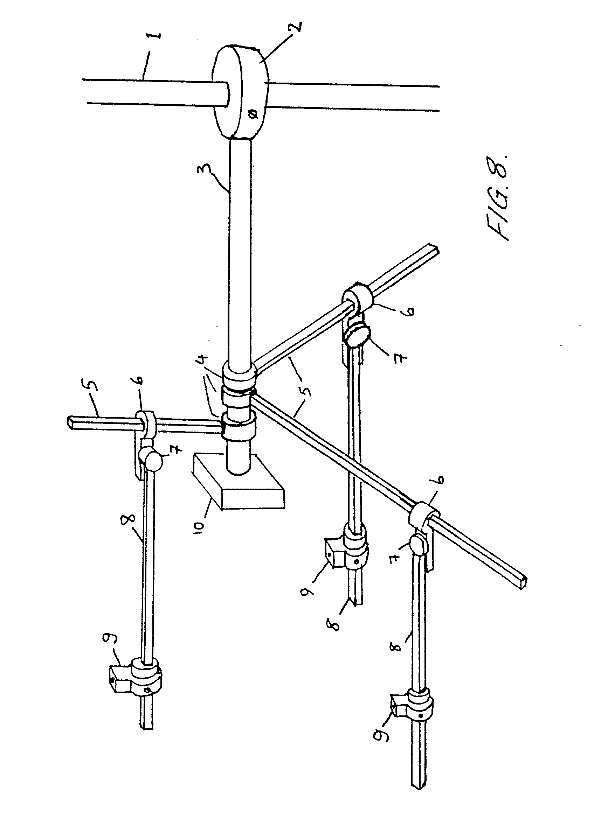

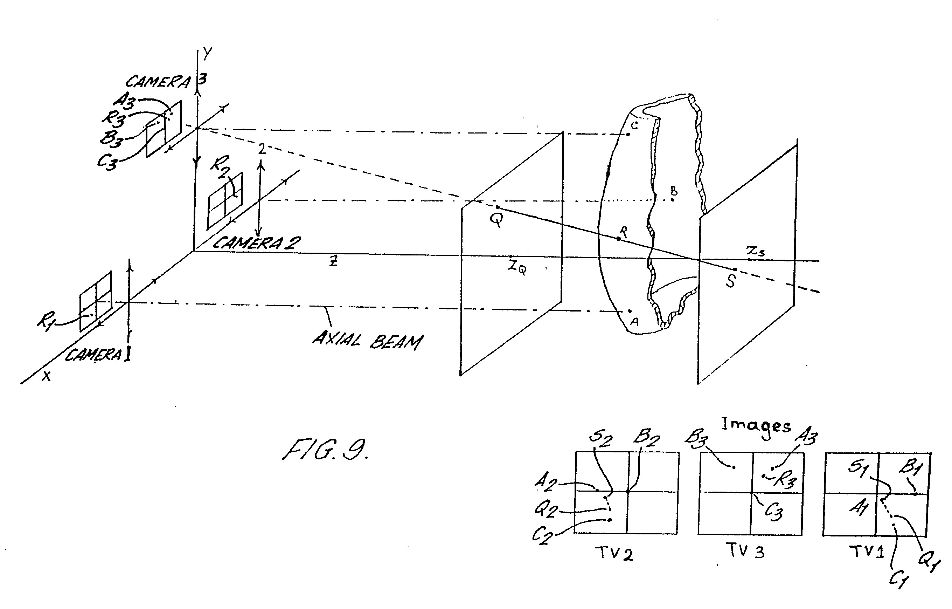

⊞ Not Shown in Fig.1.

FIG.3.

0257965

FIG. 4.

High Ceiling

31        20        31

wall                    Tall
                        wall

20

31

32

Ceiling

32

**FIG. 6.**

22

22

20        30

**FIG. 5.**

0257965

FIG. 7.

CAMERA 1

CAMERA 2

$R_1$

$R_2$

Q

R

S

$Z_Q$

$Z_S$

y

x

Images

$R_1$

$S_2$  $Q_2$

T.V. 1

T.V. 2

0257965

FIG. 8.

0257965

FIG. 9.